Europäisches Patentamt

European Patent Office

Office européen des brevets

(19)

(11) Veröffentlichungsnummer: **0 647 832 A2**

# (12) EUROPÄISCHE PATENTANMELDUNG

(21) Anmeldenummer: **94115517.8**

(22) Anmeldetag: **01.10.94**

(51) Int. Cl.6: **G01D 5/16**

(30) Priorität: **06.10.93 DE 4334080**

(43) Veröffentlichungstag der Anmeldung:
**12.04.95 Patentblatt 95/15**

(84) Benannte Vertragsstaaten:
**DE ES FR GB IT SE**

(71) Anmelder: **TEMIC TELEFUNKEN
microelectronic GmbH
Theresienstrasse 2
D-74072 Heilbronn (DE)**

(72) Erfinder: **Schuster, Günther, Dr.
Eschenbacherstrasse 26
D-73108 Gammelshausen (DE)**
Erfinder: **Hampe, Andreas
Maierhöfe 30
D-73235 Weilheim (DE)**

(74) Vertreter: **Maute, Hans-Jürgen, Dipl.-Ing.
TEMIC TELEFUNKEN microelectronic GmbH
Postfach 35 35
D-74025 Heilbronn (DE)**

(54) **Piezoresistive Sensorstruktur.**

(57) Die Erfindung beschreibt eine piezoresistive Sensorstruktur in monolithischem Halbleitermaterial, bestehend aus drei bzw. vier Elektroden und einer, die Elektroden verbindenden Widerstandsschicht, wobei eine einwirkende mechanische Spannng die Stromverteilung in den Elektroden so verändert, daß auf einfache und effiziente Weise ein elektrisches Signal in Form eines Differenzstromes gemessen wird.

**Fig. 1**

EP 0 647 832 A2

Die Erfindung betrifft eine piezoresistive Sensorstruktur, hergestellt in monolithischem Halbleitermaterial gemäß dem Oberbegriff des Anspruchs 1.

Mikromechanische Sensoren in monolithischen Halbleitermaterialien werden dazu verwendet, von außen einwirkende physikalische Größen (Kraft, Beschleunigung, Druck) in elektrische Signale zu wandeln. Es sind in der Praxis Sensoren bekannt, die auf dem resistiven oder dem kapazitiven Prinzip beruhen.

Beim resistiven Prinzip führt eine, von außen einwirkende physikalische Größe zu einer Verformung einer geeignet hergestellten mikromechanischen Struktur, z.B. Membrane oder Biegebalken, in der sodann eine mechanische Spannung induziert wird, die ihrerseits in die mikromechanische Struktur integrierte elektrische Widerstände in ihrer Größe merklich ändert. Die meßbare Wirkung wird piezoresistiver Effekt genannt.

Es sind Strukturen bekannt, die diesen Effekt in ein elektrisches. Signal wandeln mittels Wheatston'scher Brücke, siehe die deutsche Offenlegungsschrift 29 32 956. Die Wheatstone-Brücke besteht aus vier Widerständen; die Brücke wird mit Konstantstrom oder Konstantspannung versorgt. Die Widerstände sind so angeordnet, daß der longitudinale und der transversale piezoresistive Effekt genutzt wird. Das Ausgangssignal ist die im Brückenzweig abfallende Differenzspannung.

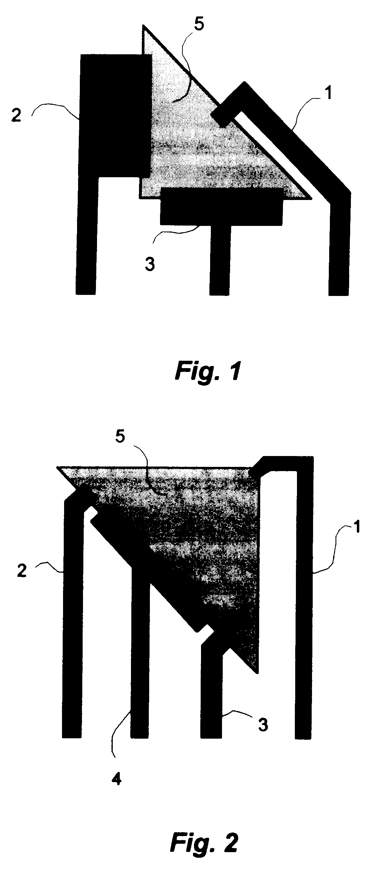

Die erfindungsgemäße Sensorstruktur besteht aus drei bzw. vier Elektroden und einer Widerstandsschicht 5, deren Form insbesondere der Elektrodenform angepaßt ist. Über die Elektrode 1 wird ein Konstantstrom in die Widerstandsschicht 5 eingespeist, der sich in der Anordnung nach Fig. 1 gleichmäßig auf die beiden Elektroden 2 und 3 aufteilt.

Bei der Anordnung nach Fig. 2 teilt sich der Gesamtstrom auf die drei Elektroden 2, 3 und 4 auf, wobei der größte Anteil des Stromes durch die Elektrode 4 fließt und der kleinere Teil des Stromes sich gleichmäßig auf die Elektroden 2 und 3 aufteilt. Die Elektroden 2 und 3 bzw. die Elektroden 2, 3 und 4 sind Stromsenken, die jeweils auf dem gleichen Potential liegen.

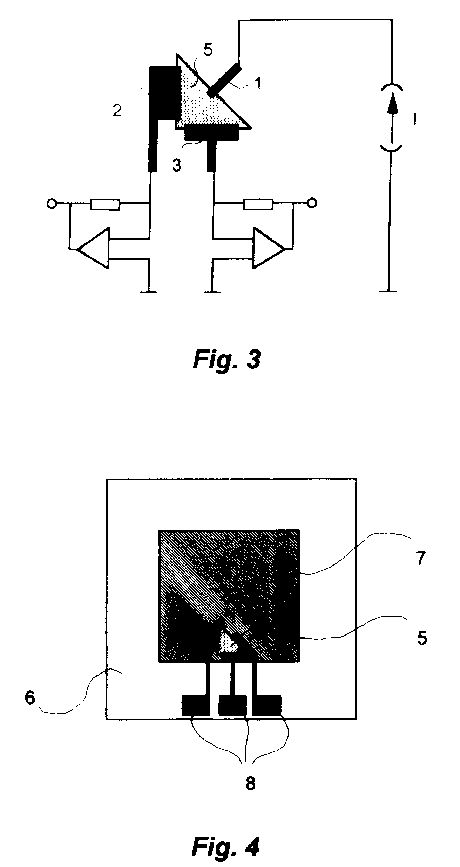

Fig. 3 zeigt schematisch die Beschaltung der Sensorstruktur mit Operationsverstärkern. Dabei wird die Widerstandsschicht vom Konstantstrom I durchflossen. Wirkt nun eine mechanische Spannung auf das Element und somit auf die Sensorstruktur ein, so bewirkt diese eine unterschiedliche Beweglichkeit der Ladungsträger in den Hauptrichtungen der Elektroden 2 und 3. Dies wiederum hat zur Folge, daß beispielsweise der Strom durch die Elektrode 2 zunimmt und der Strom durch die Elektrode 3 abnimmt. Der Differenzstrom $\Delta I_{23} = I_2 - I_3$ ist ein Maß für die mechanische Spannung und somit ein Maß für die von außen einwirkende Kraft.

Fig. 4 zeigt ein Ausführungsbeispiel als Drucksensor-Chip 6. Ein von außen einwirkender Druck verformt die Membrane 7, wodurch eine mechanische Spannung in der Widerstandsschicht 5 induziert wird. Über die Aluminiumpads 8 wird der Chip mit der Auswerteelektronik verbunden.

In Vergleich zu einer Wheatstonebrücke gemäß dem Stand der Technik hat diese Sensorstruktur folgende Vorteile:

- Niederohmige, geschlossene und damit störunempfindliche piezoresistive Sensorstruktur,
- Messung von Strömen, nicht von Spannungen,
- hoher Wirkungsgrad aufgrund symmetrischer Potentialverteilung,
- kleine thermische Verlustleistung im Element, da sehr geringer Bahnwiderstand und
- sehr kleines Offsetsignal.

Aufgrund der genannten Eigenschaften ist die Struktur ideal geeignet zur Herstellung von Kraft-, Druck- und Beschleunigungssensoren in verschiedensten Halblitermaterialien.

## Patentansprüche

1. Piezoresistive Sensorstruktur, hergestellt in monolithischem Halbleitermaterial, **dadurch gekennzeichnet,** daß die flächigen Strukturen, bestehend aus einer stromeinspeisenden Elektrode (Emitter) und zwei stromaufnehmenden Elektroden (Kollektoren) durch eine dotierte Widerstandsschicht geeigneter Form miteinander verbunden sind und die stromaufnehmenden Elektroden (Kollektoren) auf gleichem elektrischen Potential liegen.

2. Piezoresistive Sensorstruktur nach Anspruch 1, **dadurch gekennzeichnet,** daß die Sensorstruktur aus einer stromeinspeisenden Elektrode (Emitter) und drei stromaufnehmenden Elektroden (Kollektoren) besteht.

3. Piezoresistive Sensorstruktur nach Anspruch 1 oder 2, **dadurch gekennzeichnet,** daß die Elektroden aus hochdotierten, niederohmigen Schichten oder aus metallischen Schichten hergestellt sind.

4. Piezoresistive Sensorstruktur nach einem der vorhergehenden Ansprüche, **dadurch gekennzeichnet,** daß die Struktur der Emitterelektrode mit einer Gleichspannung versorgt wird.

**Fig. 1**

**Fig. 2**

**Fig. 3**

**Fig. 4**